# EUROPEAN PATENT SPECIFICATION

(11) **EP 3 910 722 B1**
(45) Date of publication and mention of the grant of the patent: **21.10.2026**
(21) Application number: 21173968.5
(22) Date of filing: 14.05.2021
(51) Int. Cl.: H01M 10/613, H01M 10/625, H01M 10/6568

(54) **BATTERY PACK PROVIDED WITH A SAFETY SYSTEM FOR THERMAL RUNAWAY AND VEHICLE PROVIDED WITH SUCH BATTERY PACK**
BATTERIEPACK MIT EINEM SICHERHEITSSYSTEM GEGEN THERMISCHES DURCHGEHEN SOWIE FAHRZEUG MIT EINEM SOLCHEN BATTERIEPACK
BLOC DE BATTERIES AVEC SYSTÈME DE SECURITÉ CONTRE UN CLAQUAGE THERMIQUE ET VÉHICULE AVEC UN TEL BLOC DE BATTERIES

(30) Priority: 15.05.2020 IT 202000011227
(43) Date of publication of application: 17.11.2021
(73) Proprietor: Altra S.p.A., 16138 Genova (IT)
(72) Inventor: MANTOVANI, Giorgio, 16148 GENOVA (IT)
(74) Representative: Studio Torta S.p.A.

(56) References cited:
- CN-A- 108 400 404
- CN-A- 108 400 408
- CN-A- 110 112 507
- CN-U- 210 073 952
- DE-U1- 202019 102 367
- US-A1- 2010 136 391
- US-A1- 2012 111 445

## Description

### TECHNICAL FIELD

The invention relates to a battery pack for an electric drive vehicle, in particular to a battery pack provided with a safety system for the "thermal runaway" phenomenon.

### KNOWN STATE OF THE ART

As it is known, vehicles with an at least partially electric drive comprise one or more battery packs configured to supply a sufficient amount of power needed for the drive of the vehicle and for the operation of other auxiliary comfort devices, such as the air conditioning system, or functional devices, such as screens to display information that can be useful for the passengers.

As it is known, the electric batteries used in these vehicles are electrochemical storage devices, which, during use, while they are being charged and as the charge depletes, tend to heat up and are housed in a respective battery pack, which insulates them from the outside.

Following an external tampering and/or an internal fault, it is possible for the heating to reach levels that are such as to generate a phenomenon known as "thermal runaway", in which the temperature triggers exothermic reactions, which further increase the temperature, thus leading to possible disastrous consequences, such as gas emissions, explosions or fires.

In these cases, the battery pack needs to be quickly cooled down in order to prevent this condition from spreading among the inner battery modules or, at least, to the other adjacent batteries and in order to avoid damages that are potentially lethal for the passengers of the vehicle.

This cooling operation, which requires large quantities of fire extinguishing liquid, is normally carried out by having rescuers access the inside of the vehicle and, from where, reach the battery pack and spray/inject said fire extinguishing liquid. However, this operation often is time-consuming, dangerous and scarcely effective because of the housing of the battery pack and because of the fact that rescuers have to access the inside of the vehicle in order to reach it.

Examples of these housings, which can hardly be reached by rescuers, are shown in patent applications FR3074454 A1, FR3059952 A1,WO2013128143 A1, US2012111445 A1, CN105400404 A, DE202019102367 U1 or CN210073852 U.

Therefore, a battery pack for an electric drive vehicle is needed, which allows for a prompt intervention in order to stop a thermal runway phenomenon.

The object of the invention is to fulfil the needs discussed above in an economic and optimized fashion.

### SUMMARY OF THE INVENTION

The aforesaid object is reached by a battery pack for a vehicle and by a vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a schematic perspective view, with parts removed for greater clarity, of a vehicle comprising a battery pack provided with a safety system according to a preferred embodiment of the invention;
- Figure 2 is a cross section view of an enlarged element of figure 1 in a first operating condition;
- Figure 3 is a cross section view of an enlarged element of figure 1 in a second operating; and

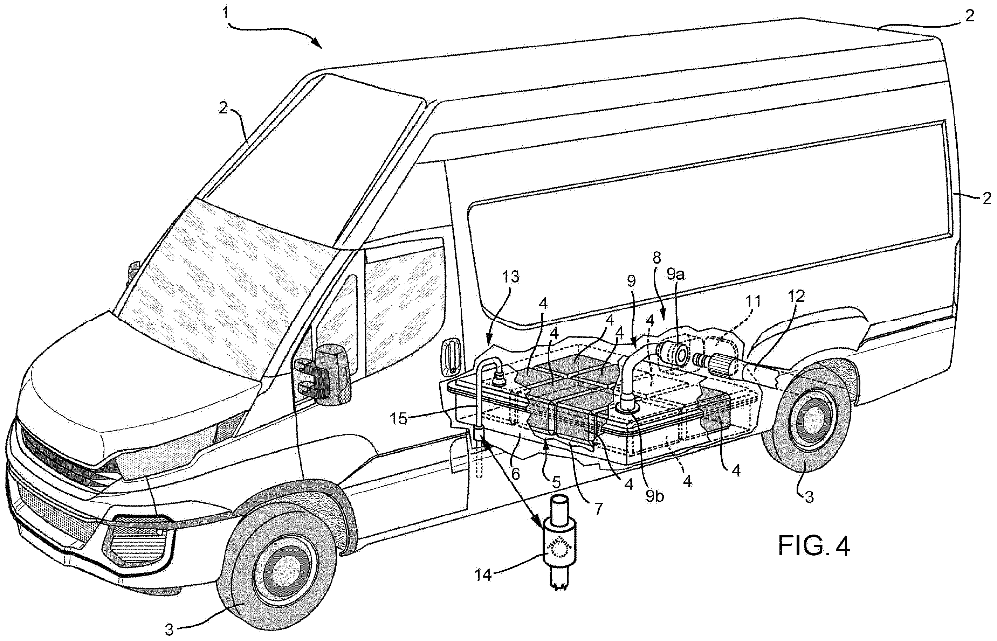

   - Figure 4 is a schematic perspective view, with parts removed for greater clarity, of a vehicle comprising a battery pack provided with a safety system according to an alternative embodiment of the invention.

### DETAILED DESCRIPTION OF THE INVENTION

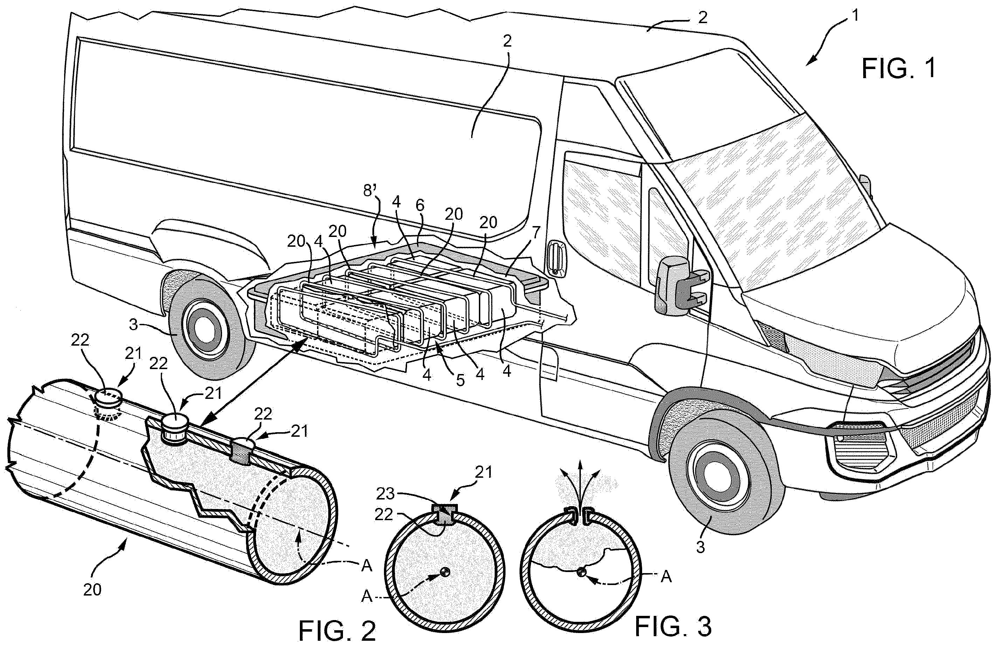

Figures 1 to 3 show a vehicle 1 comprising, as it is known, a plurality of walls 2 mounted of a chassis (not shown), which is movable relative to the ground thanks to a plurality of wheels 3. By mere way of example, the figures shown a light commercial vehicle or van; however, this invention is not limited to this embodiment of the vehicle 1.

The vehicle 1 advantageously is an electric drive vehicle whose necessary power is supplied by at least one electric battery, in particular by a plurality of electric batteries 4 carried by the vehicle, advantageously supported, according to the embodiment shown herein, by the chassis thereof in an area under the floor of the vehicle.

In particular, said plurality of batteries 4 is housed inside a battery pack 5 comprising a casing 6 delimiting an inner space 7, which is configured to house said plurality of batteries 4 as well as different electrical connection elements and cooling systems for the batteries.

In particular, according to the invention, the battery pack 5 comprises an inner safety system 8', which is obtained inside the battery pack 5 itself, in particular is integrated in the cooling system of the batteries **4.**

As mentioned above, the closed space 7 houses, on the inside, several functional elements, such as one or more pipes 20 of a cooling system (not shown) of the batteries 4, usually a liquid cooling system, such as a water cooling system. The cooling system can be any known cooling system, is carried by the vehicle and comprises a conditioning fluid, which is free to flow in the pipes 20 close to the batteries 4.

The safety system 8' is integrated in said pipes 20 so as to selectively allow for a fluid communication between the pipes and the closed space 7 in order to allow the battery pack 5 to be drowned when a predetermined threshold temperature, such as 120°-150°, is exceeded.

In particular, the safety system 8' comprises one or more hot-melt elements 21, which are integrated in the pipes 20 and are configured to melt when the temperature in the space 7 reaches the aforesaid level. Preferably, the hot-melt elements 21 comprise plugs 22, which are housed in respective holes 23 obtained along the pipes 20. In normal operating conditions, said plugs 22 seal the conditioning fluid inside the pipes 20.

According to the embodiment shown herein, said plugs are carried along a development axis A of the pipes 20, advantageously axially equally spaced apart from one another and advantageously radially aligned with one another relative to the axis A, i.e. not angularly offset relative to one another circumferentially to the latter.

The embodiment of the battery pack 1 comprising a safety device 8' as described above works as follows.

In a normal operating condition of the batteries **4,** the conditioning fluid flows along the pipes 20 close to the batteries 4 removing heat, as it is known. In this condition, the hot-melt elements 21 prevent the conditioning fluid flowing inside them from flowing out.

Should the temperature of the batteries 4 reach a predetermined value, for example 120-150°, the heat in the closed space 7 is such as to melt the hot-melt elements 21.

Therefore, in this case, the conditioning fluid, which is cold by nature, can freely flow inside the closed space 7, drowning the batteries and quickly cooling them, as the entire conditioning system is emptied into the battery pack 5.

Possible gases generated by the injection of fluid or a possible excess fluid injected into the closed space 7 are let out through venting means 13, which are described more in detail in the following embodiment. The operation of the safety system 8' is similar in case of use of a compressed inert gas. After having been injected, the gas tends to expand, thus removing heat from the batteries and cooling them.

In the embodiment of figure 1, the battery pack 5 comprises an outer safety system 8 to selectively allow for a fluid communication between the outside and the inner space 7 of the batter pack 5 in order to permit the injection of fluids, which are configured to cool the batteries 4 in case they exceed a predetermined temperature. The outer system 8 is available in addition to the inner system **8',** which is not shown in figures 1 to 3 for the sole sake of clarity.

In particular, the safety system 8 comprises a pipe 9 connecting the inner space 7 to one of the walls 2 of the vehicle **1.** Hence, the pipe 9 comprises a first opening 9a, which is in contact with the outside, and a second opening 9b, which is in contact with the closed space **7.**

Advantageously, the first opening 9a can be closed by means of a plug (not shown) and can be hidden by means of a cover 11, similarly to what happens in the fuelling area of the vehicle, so as not to affect the profile of the body.

Preferably, the safety system 8 can further comprise a valve (not shown), which is configured to allow fluid to flow through only when the temperature inside the closed space 7 reaches a predetermined level.

Alternatively, the valve can be a known thermovalve, which is configured to open upon reaching of the predetermined temperature level, or a plug element made of a hot-melt plastic material, which is configured to melt at the aforesaid predetermined temperature. Advantageously, the valve is housed close to the second opening 9b.

Thanks to the first opening 9a, a liquid, such as for example water, fire extinguishing solutions or compressed inert gases, can be injected into the closed space 7 thanks to any type of pipe 12, for example a pipe like the ones normally used by fire-fighters or any water pipe. In order to do so, the first opening 9a is sized so as to accommodate a wide range of diameters of known pipes for fire trucks and, anyway, is sized for any simple pipe within a predetermined range of diameters.

As mentioned above, the battery pack 5 is provided with venting means 13, which are configured to let out possible gases generated by the injection of a liquid or of a compressed inert gas into the closed space **7.**

Advantageously, said venting means comprise a check valve **14,** which is configured to allow fluid to flow from the closed space 7 to the outside and not vice versa. Preferably, said check valve 14 is housed inside a duct 15 fluidically connecting the battery pack 5 to the outside and shaped like an upside-down "U" oriented towards the ground.

The embodiment of the battery pack 1 comprising a safety device 8 as described above works as follows.

In case the temperature of the batteries 4 reaches a predetermined value, for example 120-150°, which can be detected by means of temperature sensor means arranged close to batteries, the driver of the vehicle, properly warned by means of acoustic or visual signallers present in the driver's cabin, can stop in an area provided with water pipes, for example a gas station, or ask for help in order to request the intervention of rescuers.

In any case, in order to cool the batteries and, hence, stop the thermal runway phenomenon, fluid needs to be introduced into the conduit 9 through the pipe 12. The high temperature inside the closed space 7 causes the thermovalve located close to the second opening 9b to melt or open, thus allowing the fluid to freely flow into the closed space **7,** drowning the batteries and promptly cooling them.

Possible gases generated by the injection of fluid or a possible excess fluid injected into the closed space 7 are let out through the venting means 13. The operation of the safety system 8 is similar in case of use of a compressed inert gas. After having been injected, the gas tends to expand, thus removing heat from the batteries and cooling them, and can flow out through the venting means 13.

Owing to the above, the advantages of a battery pack 5 comprising a safety system 8 according to the invention are evident.

In particular, thanks to the possibility of "drowning" the inner space 7 of the battery pack 5 in a quick and safe manner, without having to access the inside of the vehicle, the batteries 4 can be cooled in a fast manner, stopping the thermal runway phenomenon.

The integration of the safety system 8' in the conditioning system inside the battery pack 5 similarly leads to the effects discussed above.

The use of the hot-melt elements 21 allows for a highly precise control of the temperature at which the drowning of the space 7 is enabled. Moreover, these elements are integrated in the already existing pipes 20 in an economic manner, without taking up further space inside the space 7.

In addition, the presence of the venting means 13 prevents possible gases generated inside the battery pack 5 from increasing the pressure inside the latter in a dangerous manner.

The combination of the safety systems 8 described above, an inner one and an outer one, further provides a greater safety, as they can temporarily stop the thermal runway phenomenon, thanks to the inner safety system 8', thus safely reaching an area in which the battery pack can further be drowned 5, thanks to the outer safety system 8.

Indeed, with the addition of a connection for an outer pipe, this is facilitated by the conduit 9, which allows for a direct fluid communication between the inner space 7 and the outside of the vehicle.

The presence of a valve inside the conduit 9 avoids an undesired fluid communication, except for an emergency communication due to the temperature of the batteries **4.**

Finally, the battery pack 5 comprising a safety system according to the invention can be subjected to changes and variants, which, though, do not go beyond the scope of protection set forth in the appended claims.

For example, as already mentioned above, the vehicle can clearly be any type of vehicle and can comprise several battery packs 5 arranged in a different manner from the one described above.

Moreover, there can be different pipes connecting the space 7 to the outside in different points of the vehicle and the valve inside said pipes as well as the venting means can be optional.

Furthermore, the integration of the safety system in the pipes of the cooling system can be obtained in a different manner and through different hot-melt elements.

## Claims

1. Battery pack (5) for a vehicle (1), said battery pack (5) comprising a casing (6) defining a closed space (7) configured to house one or more electric batteries (4), said battery pack (5) comprising an inner safety system (8') configured to allow to selectively enter fluids inside said closed space (7) when the temperature in said battery pack (5) exceeds a predetermined threshold temperature, said battery pack (5) comprising a fluid cooling system configured to remove heat from said electric batteries (4), said safety system (8') being integrated in said fluid cooling system;
said battery pack (5) further comprising an outer safety system (8) configured to allow to selectively enter fluids inside said closed space (7) when the temperature in said battery pack (5) exceeds a predetermined threshold temperature, said outer safety system (8) being configured to selectively allow fluid communication between said closed space (7) and a wall (2) of said vehicle (1).

2. Battery pack according to claim 1, wherein said cooling system comprises one or more pipes (20), said safety system (8') being integrated in said pipes (20) and configured to allow fluid communication between said pipes (20) and said closed space (7) when said predetermined temperature is reached.

3. Battery pack according to claim 2, in which said one or more pipes (20), are equipped with one or more hot-melt elements (21) configured to melt when said preset temperature is reached, allowing fluid communication between said pipes (20) and said closed space (7).

4. Battery pack according to claim 3, wherein said one or more hot-melt elements (21) comprise a plurality of plugs (22) sealed in respective holes (23) made along said one or more pipes (20) and configured to melt when said predetermined temperature is reached.

5. Battery pack according to any one of the preceding claims, wherein said outer safety system (8) comprises a conduit (9) fluidly connecting said closed space (7) and said wall (2), said conduit (9) comprising a first opening (9a) placed in contact with the external environment and a second opening (9b) placed in contact with said closed space (7).

6. Battery pack according to claim 5, wherein said second opening (9b) is configured to allow the coupling with a pipe (12) of a fire-fighting vehicle.

7. Battery pack according to claim 5 or 6, wherein said second opening (9b) is provided with a door (11) configured to selectively isolate said second opening (9b) from the external environment.

8. Battery pack according to one of claims 5 to 7, wherein said outer safety system (8) comprises a thermovalve configured to allow fluid communication between said first opening (9a) and said second opening (9b) only when it is reached said predetermined temperature.

9. Battery pack according to one of claims 5 to 8, wherein said outer safety system (8) comprises a thermovalve made of thermoplastic material and configured to melt when said predetermined temperature is reached.

10. Battery pack according to any one of the preceding claims, comprising venting means (13) configured to allow fluids to escape from said closed space (7) towards the external environment when the pressure in said battery pack (5) reaches a set level.

11. Battery pack according to claim 10 wherein said venting means (13) comprise a check valve (14) configured to allow the passage of fluid from the closed space (7) to the outside and not vice versa.

12. Vehicle (1) comprising a battery pack (5) according to one of the preceding claims.

## Patentansprüche

1. Batteriebaugruppe (5) für ein Fahrzeug (1), wobei die Batteriebaugruppe (5) ein Gehäuse (6) umfasst, das einen geschlossenen Raum (7), der zum Aufnehmen einer oder mehrerer elektrischer Batterien (4) konfiguriert ist, definiert, wobei die Batteriebaugruppe (5) ein inneres Sicherheitssystem (8') umfasst, das konfiguriert ist zu möglichen, dass wahlweise Fluide in den geschlossenen Raum (7) eintreten, wenn die Temperatur in der Batteriebaugruppe (5) eine vorgegebene Schwellentemperatur übersteigt, wobei die Batteriebaugruppe (5) ein Fluidkühlsystem umfasst, das konfiguriert ist, Wärme von den elektrischen Batterien (4) zu entfernen, wobei das Sicherheitssystem (8') in das Fluidkühlsystem integriert ist;
wobei die Batteriebaugruppe (5) ferner ein äußeres Sicherheitssystem (8) umfasst, das konfiguriert ist zu ermöglichen, dass wahlweise Fluide in den geschlossenen Raum (7) eintreten, wenn die Temperatur in der Batteriebaugruppe (5) eine vorgegebene Schwellentemperatur übersteigt, wobei das äußere Sicherheitssystem (8) konfiguriert ist, wahlweise eine Fluidverbindung zwischen dem geschlossenen Raum (7) und einer Wand (2) des Fahrzeugs (1) zu ermöglichen.

2. Batteriebaugruppe nach Anspruch 1, wobei das Kühlsystem ein oder mehrere Rohre (20) umfasst, wobei das Sicherheitssystem (8') in die Rohre (20) integriert ist und konfiguriert ist, die Fluidverbindung zwischen den Rohren (20) und dem geschlossenen Raum (7) zu ermöglichen, wenn die vorgegebene Temperatur erreicht ist.

3. Batteriebaugruppe nach Anspruch 2, in der das eine oder die mehreren Rohre (20) mit einem oder mehreren Heißschmelzelementen (21) ausgestattet sind, die konfiguriert sind zu schmelzen, wenn die im Voraus festgelegte Temperatur erreicht ist, was die Fluidverbindung zwischen den Rohren (20) und dem geschlossenen Raum (7) ermöglicht.

4. Batteriebaugruppe nach Anspruch 3, wobei das eine oder die mehreren Heißschmelzelemente (21) mehrere Pfropfen (22) umfassen, die in jeweiligen Löchern (23), die entlang des einen oder der mehreren Rohre (20) hergestellt sind, abgedichtet sind und konfiguriert sind zu schmelzen, wenn die vorgegebene Temperatur erreicht ist.

5. Batteriebaugruppe nach einem der vorhergehenden Ansprüche, wobei das äußere Sicherheitssystem (8) eine Leitung (9) umfasst, die den geschlossenen Raum (7) und die Wand (2) fluidtechnisch verbindet, wobei die Leitung (9) eine erste Öffnung (9a), die in Kontakt mit der Außenumgebung platziert ist, und eine zweite Öffnung (9b), die in Kontakt mit dem geschlossenen Raum (7) platziert ist, umfasst.

6. Batteriebaugruppe nach Anspruch 5, wobei die zweite Öffnung (9b) konfiguriert ist, das Koppeln mit einem Schlauch (12) eines Feuerlöschfahrzeugs zu ermöglichen.

7. Batteriebaugruppe nach Anspruch 5 oder 6, wobei die zweite Öffnung (9b) mit einer Klappe (11) versehen ist, die konfiguriert ist, die zweite Öffnung (9b) wahlweise von der Außenumgebung zu trennen.

8. Batteriebaugruppe nach einem der Ansprüche 5 bis 7, wobei das äußere Sicherheitssystem (8) ein Thermoventil umfasst, das konfiguriert ist, die Fluidverbindung zwischen der ersten Öffnung (9a) und der zweiten Öffnung (9b) nur dann zu ermöglichen, wenn es die vorgegebene Temperatur erreicht hat.

9. Batteriebaugruppe nach einem der Ansprüche 5 bis 8, wobei das äußere Sicherheitssystem (8) ein Thermoventil umfasst, das aus einem thermoplastischen Material hergestellt ist und konfiguriert ist zu schmelzen, wenn die vorgegebene Temperatur erreicht ist.

10. Batteriebaugruppe nach einem der vorhergehenden Ansprüche, die Entlüftungsmittel (13) umfasst, die konfiguriert sind zu ermöglichen, dass Fluide aus dem geschlossenen Raum (7) in Richtung der Außenumgebung entweichen, wenn der Druck in der Batteriebaugruppe (5) einen Sollwert erreicht.

11. Batteriebaugruppe nach Anspruch 10, wobei die Entlüftungsmittel (13) ein Rückschlagventil (14) umfassen, das konfiguriert ist, den Durchgang des Fluids von dem geschlossenen Raum (7) nach außen und nicht umgekehrt zu ermöglichen.

12. Fahrzeug (1), das eine Batteriebaugruppe (5) nach einem der vorhergehenden Ansprüche umfasst.

## Revendications

1. Bloc-batterie (5) pour un véhicule (1), ledit bloc batterie (5) comprenant un carter (6) définissant un espace clos (7) configuré pour loger une ou plusieurs batteries électriques (4), ledit bloc-batterie (5) comprenant un système de sécurité interne (8') configuré pour permettre de faire entrer sélectivement les fluides à l'intérieur dudit espace clos (7) lorsque la température, dans ledit bloc-batterie (5), dépasse une température de seuil prédéterminée, ledit bloc-batterie (5) comprenant un système de refroidissement par fluide configuré pour retirer la chaleur desdites batteries électriques (4), ledit système de sécurité (8') étant intégré dans ledit système de refroidissement par fluide ;
ledit bloc-batterie (5) comprenant en outre un système de sécurité externe (8) configuré pour permettre de faire entrer sélectivement les fluides à l'intérieur dudit espace clos (7) lorsque la température dans ledit bloc-batterie (5) dépasse une température de seuil prédéterminée, ledit système de sécurité externe (8) étant configuré pour permettre sélectivement la communication de fluide entre ledit espace clos (7) et une paroi (2) dudit véhicule (1).

2. Bloc-batterie selon la revendication 1, dans lequel ledit système de refroidissement comprend un ou plusieurs tuyaux (20), ledit système de sécurité (8') étant intégré dans lesdits tuyaux (20) et configuré pour permettre la communication de fluide entre lesdits tuyaux (20) et ledit espace clos (7) lorsque ladite température prédéterminée est atteinte.

3. Bloc-batterie selon la revendication 2, dans lequel lesdits un ou plusieurs tuyaux (20) sont équipés d'un ou de plusieurs éléments thermofusibles (21) configurés pour fondre lorsque ladite température prédéterminée est atteinte, permettant la communication de fluide entre lesdits tuyaux (20) et ledit espace clos (7).

4. Bloc-batterie selon la revendication 3, dans lequel lesdits un ou plusieurs éléments thermofusibles (21) comprennent une pluralité de bouchons (22) scellés dans des trous (23) respectifs réalisés le long desdits un ou plusieurs tuyaux (20) et configurés pour fondre lorsque ladite température prédéterminée est atteinte.

5. Bloc-batterie selon l'une quelconque des revendications précédentes, dans lequel ledit système de sécurité externe (8) comprend un conduit (9) raccordant, de manière fluidique, ledit espace clos (7) et ladite paroi (2), ledit conduit (9) comprenant une première ouverture (9a) placée en contact avec l'environnement extérieur et une deuxième ouverture (9b) placée en contact avec ledit espace clos (7).

6. Bloc-batterie selon la revendication 5, dans lequel ladite deuxième ouverture (9b) est configurée pour permettre le couplage avec un tuyau (12) d'un véhicule anti-incendie.

7. Bloc-batterie selon la revendication 5 ou 6, dans lequel ladite deuxième ouverture (9b) est prévue avec une porte (11) configurée pour isoler sélectivement ladite deuxième ouverture (9b) de l'environnement extérieur.

8. Bloc-batterie selon l'une des revendications 5 à 7, dans lequel ledit système de sécurité externe (8) comprend une vanne thermostatique configurée pour permettre la communication de fluide entre ladite première ouverture (9a) et ladite deuxième ouverture (9b) uniquement lorsque l'on a atteint ladite température prédéterminée.

9. Bloc-batterie selon l'une des revendications 5 à 8, dans lequel ledit système de sécurité externe (8) comprend une vanne thermostatique réalisée avec un matériau thermoplastique et configurée pour fondre lorsque ladite température prédéterminée est atteinte.

10. Bloc-batterie selon l'une quelconque des revendications précédentes, comprenant des moyens d'évent (13) configurés pour permettre aux fluides de s'échapper dudit espace clos (7) vers l'environnement extérieur lorsque la pression dans ledit bloc-batterie (5) atteint un niveau déterminé.

11. Bloc-batterie selon la revendication 10, dans lequel lesdits moyens d'évent (13) comprennent une soupape de non-retour (14) configurée pour permettre le passage du fluide de l'espace clos (7) vers l'extérieur et pas vice versa.

12. Véhicule (1) comprenant un bloc-batterie (5) selon l'une des revendications précédentes.
